# EUROPÄISCHE PATENTANMELDUNG

(11) **EP 3 170 848 A1**
(43) Veröffentlichungstag der Anmeldung: **24.05.2017**
(21) Anmeldenummer: 15195771.9
(22) Anmeldetag: 23.11.2015
(51) Int. Cl.: C08G 18/48, C08G 18/67, C08G 18/75, C08G 18/82, C08G 18/24

(54) **KATIONISCHE PHOTOTRANSFERPOLYMERISATION**

(71) Anmelder: Henkel AG & Co. KGaA, 40589 Düsseldorf (DE); Max-Planck-Gesellschaft zur Förderung der Wissenschaften e.V., 80539 München (DE)
(72) Erfinder: TADEN, Andreas, 40597 Düsseldorf (DE); KIRSCHBAUM, Stefan, 51379 Leverkusen (DE); LANDFESTER, Katharina, 55122 Mainz (DE)

(57) **Zusammenfassung**

Die vorliegende Erfindung betrifft ein Verfahren zur Herstellung von Acetal-haltigen Polymeren, insbesondere Polyurethan- oder Polyesterpolymeren, durch Umsetzen von Polymeren mit Alkenylethergruppen-Seitenketten, die von Alkenyletherpolyolen abgeleitete Monomereinheiten enthalten, mit mono- oder polyfunktionellen Alkoholen. Des Weiteren richtet sich die Erfindung auf die Polymere, die mittels des erfindungsgemäßen Verfahrens erhältlich sind, Zusammensetzungen, die diese enthalten, und deren Verwendung.

## Beschreibung

Die vorliegende Erfindung betrifft ein Verfahren zur Herstellung von Acetal-haltigen Polymeren, insbesondere Polyurethanen (PU) und Polyestern, aus Alkenylethergruppen-haltigen Polymeren und mono- oder polyfunktionellen Alkoholen mittels kationischer Phototransferpolymerisation. Des Weiteren richtet sich die Erfindung auf die Polymere, die mittels des erfindungsgemäßen Verfahrens erhältlich sind, Zusammensetzungen, die diese enthalten, und deren Verwendung.

Acetale sind in der organischen Chemie weithin verwendete Schutzgruppen für Hydroxylgruppen. Ein konkretes Syntheseverfahren ist die Additionsreaktion von Vinylethern unter wasserfreien, sauren Bedingungen. Während die Acetalfunktionalität unter neutralen oder basischen Bedingungen stabil ist, wird sie in wässrigen, stark sauren Medien leicht hydrolysiert und die entsprechende Verbindung damit entschützt. Aufgrund der simplen Chemie wurden Acetale auch mittels Polyaddition von Divinylethern und Dialkoholen oder Polyaddition von hydroxy-funktionellen Vinylethern in Polymere integriert, um pHkontrollierbare Materialien mit verbesserter Degradation zu erhalten (Mangold et al., Macromolecules 2011, 44 (16), 6326-6334; Ruckenstein & Zhang, J. Pol. Sci. Part A: Polymer Chemistry 2000, 38, 1848-1851; Heller et al., J. Pol. Sci. Polymer Letters Edition 1980, 18, 293-297).

Basierend auf denselben Prinzipien wurden komplexere polymere Acetale entworfen. Beispielsweise wurden mit Vinyletherseitenketten funktionalisierte Polyether und Polyphosphorester als pH-sensitive Trägersubstanzen für die zielgerichtete Abgabe von pharmazeutisch aktiven Wirkstoffen beschrieben (Mangold et al., supra; Lim et al. Macromolecules 2014, 47 (14), 4634-4644; Pohlit et al. Biomacromolecules 2015, 16, 3103-3111; Dingels & Frey, Hierarchical Macromolecular Structures: 60 Years after the Staudinger Nobel Prize II, Advances in Polymer Science, Percec, V., Ed. Springer International Publishing: 2013; Vol. 262, pp 167-190). Des Weiteren wurden Acetaleinheiten in Polyether eingebaut, um definierte Spaltungspositionen bereitzustellen und die Abbaubarkeit zu erhöhen.

Vinylether eignen sich aufgrund ihrer außergewöhnlich elektronenreichen Doppelbindung besonders für diese Art von Chemie. Aus denselben Gründen sind sie auch kationischen Polymerisationsreaktion hochreaktiv. Unter stark sauren Bedingungen und in Abwesenheit von Wasser können Vinylether protoniert werden und die korrespondierenden Carbokationen reagieren dann in einer Kettenwachstumsreaktion. In Bezug auf die technische Anwendbarkeit war die Entwicklung von Oniumsalz-basierten Photosäureerzeugern durch Crivello et al. (Crivello et al., Macromolecules 1977, 10 (6), 1307-1315) ein Meilenstein. Die entsprechenden Photoinitiatoren können ohne vorzeitige Vergelung in einer Monomerenmischung gelöst werden und haben lange Lagerungszeiten, aber erzeugen bei UV-Exposition leicht sogenannte "Supersäuren" als hochaktive Spezies für die kationische Polymerisation. Die kationische Polymerisation ist allerdings empfindlich gegenüber Nukleophilen, wobei beispielsweise Hydroxylgruppen über Addition an das Carbokation und Regeneration des Protons als Transferagentien wirken. Die Rate dieser Transferreaktion ist sehr schnell und wenn eine stöchiometrische Menge an Alkohol vorhanden ist wurde in der Literatur eine nahezu vollständige Acetalbildung berichtet (Hashimoto et al., Journal of Polymer Science Part A: Polymer Chemistry 2002, 40 (22), 4053-4064).

Die kationische Polymerisation von Vinylethern, die stark durch Transferreaktion beeinflusst wird, unterscheidet sich deutlich von reinen Kettenverlängerungsreaktionen. Ein gutes Beispiel für letztere Reaktion ist die Thiol-en Addition, wobei eine konsekutive Thioladdition an eine ungesättigte Doppelbindung und eine radikalische Transferreaktion stattfinden. Dementsprechend zeigt eine stöchiometrische Thiol-en Polymerisation eher Eigenschaften einer schrittweisen Polyadditonsreaktion als einer radikalischen Polymerisation und führt zu einer einheitlicheren Netzwerkstruktur. Die Polyaddition von difunktionellen Vinylethern und Diolen verhält sich ähnlich.

Die Erfinder haben aber nun gefunden, dass bei der Verwendung von substöchiometrischen Mengen von Hydroxylgruppen relativ zu den Vinylethergruppen gleichzeitig eine kationische Polymerisation stattfindet und sich so Polymernetzwerke ergeben, die nach der Hydrolyse fest bleiben. Mechanistisch bildet sich dabei ein Polymernetzwerk durch ein Zusammenspiel von kationischer Polymerisation und Polyaddition. Dieser zweifache Polymerisationsmechanismus bzw. Härtungsreaktion wird im Folgenden als kationische Phototransferpolymerisation bezeichnet. Diese Polymerisation liefert flexibilisierte Produkte, die spaltbare Acetalgruppen enthalten, die selektiv hydrolysiert werden können, um die Netzwerkstruktur teilweise abzubauen. Die verbesserte Abbaubarkeit ist im Hinblick auf Umweltschutzüberlegungen wichtig und kann ferner verwendet werden, um kontrolliert aktive Wirkstoffe freizusetzen oder eine kontrollierte Ablösbarkeit für temporäre Bindungen zu liefern.

Ein erster Gegenstand der vorliegenden Erfindung ist daher ein Verfahren zur Herstellung eines Acetal-haltigen Polymers, insbesondere eines Acetal-haltigen Polyurethan- oder Polyesterpolymers, umfassend Umsetzen mindestens eines Polymers mit Alkenylethergruppen-Seitenketten, das als Monomereinheit mindestens ein Alkenyletherpolyol enthaltend mindestens eine Alkenylethergruppe, insbesondere eine 1-Alkenylethergruppe, und mindestens zwei Hydroxylgruppen (-OH) enthält, insbesondere eines Polyurethans oder Polyesters, mit mindestens einem mono- oder polyfunktionellen Alkohol.

In einem weiteren Aspekt betrifft die Erfindung ein Acetal-haltiges Polymer erhältlich mittels der hierin beschriebenen Verfahren.

Noch ein Aspekt der Erfindung liegt in Verfahren zur pH-abhängigen Degradierung eines Polymers wie hierin beschrieben, wobei das Polymer mit einer wässrigen Lösung mit einem pH<7 in Kontakt gebracht wird. Ein weiterer Aspekt ist ein Verfahren zur pH-abhängigen Freisetzung einer Hydroxylgruppen-haltigen Verbindung aus einem Polymer wie hierin beschrieben, dadurch gekennzeichnet, dass das Polymer mit einer wässrigen Lösung mit einem pH<7 in Kontakt gebracht wird.

Schließlich betrifft die Erfindung auch Zusammensetzungen, insbesondere Klebstoff-, Dichtstoff-, Beschichtungsmittel-, kosmetische oder pharmazeutische Zusammensetzungen, enthaltend mindestens ein Acetal-haltiges Polymer wie hierin beschrieben, sowie die Verwendung solcher Acetal-haltigen Polymere als Bestandteil einer Klebstoff-, Dichtstoff-, Beschichtungsmittel-, kosmetischen oder pharmazeutischen Zusammensetzung.

"Alkenyletherpolyol", wie hierin verwendet, bezeichnet Verbindungen, die mindestens eine Gruppe der Formel -O-Alkenyl, die an ein Kohlenstoffatom gebunden ist, und mindestens zwei Hydroxylgruppen (-OH) enthalten. Es ist bevorzugt, dass das Alkenyletherpolyol einen, optional Urethangruppen-haltigen, organischen Rest umfasst, an den sowohl die Alkenylethergruppe als auch die Hydroxygruppen gebunden sind, d.h. die Hydroxygruppen nicht an die Alkenylgruppe gebunden sind. Es ist ferner bevorzugt, dass die Alkenylethergruppe eine 1-Alkenylethergruppe ist, d.h. die C-C-Doppelbindung benachbart zu dem Sauerstoffatom liegt. Ganz besonders bevorzugt sind Vinylethergruppen, d.h. Gruppen der Formel -O-CH=CH₂.

Der Begriff "Urethangruppe", wie hierin verwendet, bezeichnet Gruppen der Formel -O-C(O)-NH- bzw. -NH-C(O)-O-.

Der Begriff "Alkyl", wie hierin verwendet, bezeichnet einen linearen oder verzweigten, unsubstituierten oder substituierten gesättigten Kohlenwasserstoffrest, insbesondere Reste der Formel CₙH₂ₙ₊₁. Beispiele für Alkylreste schließen ein, ohne darauf beschränkt zu sein, Methyl, Ethyl, n-Propyl, isoPropyl, n-Butyl, 2-Butyl, tert-Butyl, n-Pentyl, n-Hexyl und ähnliche. "Heteroalkyl", wie hierin verwendet, bezeichnet Alkylreste, in denen mindestens ein Kohlenstoffatom durch ein Heteroatom, wie insbesondere Sauerstoff, Stickstoff oder Schwefel, ersetzt ist. Beispiele schließen, ohne Beschränkung, Ether und Polyether ein, beispielsweise Diethylether oder Polyethylenoxid.

Der Begriff "Alkenyl", wie hierin verwendet, bezeichnet einen linearen oder verzweigten, unsubstituierten oder substituierten Kohlenwasserstoffrest, der mindestens eine C-C Doppelbindung enthält.

"Substituiert", wie hierin insbesondere im Zusammenhang mit Alkyl- und Heteroalkylgruppen verwendet, bezieht sich auf Verbindungen, in denen ein oder mehrere Kohlenstoff- und/oder Wasserstoffatome durch andere Atome oder Gruppen ersetzt sind. Geeignete Substituenten schließen ein, ohne darauf beschränkt zu sein, -OH, -NH₂, -NO₂, -CN, -OCN, -SCN, -NCO, -NCS, -SH, -SO₃H, -SO₂H, -COOH,-CHO und ähnliche.

Der Begriff "organischer Rest", wie hierin verwendet, bezieht sich auf jeden organischen Rest, der Kohlenstoffatome enthält. Organische Reste können insbesondere von Kohlenwasserstoffen abgeleitet sein, wobei beliebige Kohlenstoff- und Wasserstoffatome durch andere Atome oder Gruppen ersetzt sein können. Organische Reste im Sinne der Erfindung enthalten in verschiedenen Ausführungsformen 1 bis 1000 Kohlenstoffatome.

"Epoxid", wie hierin verwendet, bezeichnet Verbindungen, die eine Epoxidgruppe enthalten.

"Cyclisches Carbonat", wie hierin verwendet, bezeichnet ringförmige Verbindungen, die als Ringbestandteil die Gruppe -O-C(=O)-O- enthalten.

Der Begriff "Alkohol" bezeichnet eine organische Verbindung, die mindestens eine Hydroxylgruppe (-OH) enthält.

Der Begriff "Amin" bezeichnet eine organische Verbindung, die mindestens eine primäre oder sekundäre Aminogruppe (-NH₂, -NHR) umfasst.

Der Begriff "Thiol" oder "Mercaptan" bezeichnet eine organische Verbindung, die mindestens eine Thiolgruppe (-SH) enthält.

Der Begriff "Carbonsäure" bezeichnet eine Verbindung, die mindestens eine Carboxylgruppe (-C(=O)OH) enthält.

Der Begriff "Derivat", wie hierin verwendet, bezeichnet eine chemische Verbindung, die gegenüber einer Referenzverbindung durch eine oder mehrerer chemischer Reaktionen verändert ist. Im Zusammenhang mit den funktionellen Gruppen -OH, -COOH, -SH und -NH₂ bzw. den Verbindungsklassen der Alkohole, Carbonsäuren, Thiole und Amine umfasst der Begriff "Derivat" insbesondere die korrespondierenden ionischen Gruppen/Verbindungen und deren Salze, d.h. Alkoholate, Carboxylate, Thiolate und Verbindungen, die quaternäre Stickstoffatome enthalten. Im Zusammenhang mit den cyclischen Carbonaten, kann der Begriff Derivat auch die unten genauer beschriebenen Thioderivate der Carbonate umfassen, d.h. Verbindungen in den ein, zwei oder alle drei Sauerstoffatome der Gruppierung -O-C(=O)-O- durch Schwefelatome ersetzt sind.

"Mindestens", wie hierin im Zusammenhang mit einem Zahlenwert verwendet, bezieht sich auf genau diesen Zahlenwert oder mehr. "Mindestens ein" bedeutet somit 1 oder mehr, d.h. beispielsweise 2, 3, 4, 5, 6, 7, 8, 9, 10 oder mehr. Im Zusammenhang mit einer Art von Verbindung bezieht sich der Begriff nicht auf die absolute Anzahl der Moleküle, sondern vielmehr auf die Anzahl der Arten von Stoffen, die unter den jeweiligen Oberbegriff fallen. "Mindestens ein Epoxid" bedeutet somit beispielsweise, dass mindestens eine Art von Epoxid, aber auch mehrere verschiedene Epoxide enthalten sein können.

Der Begriff "härtbar", wie hierin verwendet, bezeichnet eine Veränderung des Zustandes und/oder der Struktur in einem Material durch chemische Reaktion, die für gewöhnlich, aber nicht zwingend, durch mindestens eine Variable, wie die Zeit, Temperatur, Feuchtigkeit, Strahlung, Anwesenheit und Quantität eines härtungs-vermittelnden Katalysators oder Beschleunigers und dergleichen induziert wird. Der Begriff bezieht sich sowohl auf das komplette wie auch partielle Aushärten des Materials. "Strahlenhärtbar" oder "strahlen-vernetzbar", bezeichnet somit Verbindungen, die bei Exposition gegenüber Strahlung chemisch reagieren und neue Bindungen (intra- oder intermolekular) ausbilden.

"Strahlung", wie hierin verwendet, bezieht sich auf elektromagnetische Strahlung, insbesondere UV-Licht und sichtbares Licht, sowie Elektronenstrahlen. Vorzugsweise findet die Härtung durch Exposition gegenüber Licht, beispielsweise UV-Licht oder sichtbarem Licht, statt.

Der Begriff "zweiwertig" oder "2-wertig", wie hierin im Zusammenhang mit Resten oder Gruppen verwendet, bezeichnet einen Rest oder eine Gruppe, die mindestens zwei Anknüpfungsstellen hat, die eine Verbindung zu weiteren Molekülteilen herstellen. Ein zweiwertiger Alkylrest bedeutet somit im Sinne der vorliegenden Erfindung einen Rest der Formel -Alkyl-. Ein solcher zweiwertiger Alkylrest wird hierin auch als Alkylenylrest bezeichnet. "Mehrwertig" bedeutet dementsprechend, dass ein Rest oder einer Gruppe mehr als einen Anknüpfungspunkt besitzt. Beispielsweise kann ein solcher Rest auch drei-, vier-, fünf- oder sechswertig sein. "Mindestens 2-wertig" bedeutet somit 2- oder höherwertig.

Der Begriff "Poly-" bezieht sich auf eine sich wiederholende Einheit einer diesem Präfix nachgestellten (funktionellen) Gruppe oder strukturellen Einheit. So bezeichnet ein Polyol eine Verbindung mit mindestens 2 Hydroxygruppen, ein Polyalkylenglykol bezeichnet ein Polymer aus Alkylenglykol-Monomereinheiten.

"Polyisocyanat", wie hierin verwendet, bezieht sich auf organische Verbindungen, die mehr als eine Isocyanatgruppe (-NCO) enthalten.

Die im vorliegenden Text angegebenen Molekulargewichte beziehen sich, soweit nicht anders angegeben, auf das Zahlenmittel des Molekulargewichts (Mₙ). Das zahlenmittlere Molekulargewicht kann basierend auf einer Endgruppenanalyse (OH Zahl gemäß DIN 53240; NCO Gehalt wie bestimmt durch Titration nach Spiegelberger gemäß EN ISO 11909) oder mittels Gelpermeationschromatographie gemäß DIN 55672-1:2007-08 mit THF als Eluent bestimmt werden. Wenn nicht anders angegeben, sind alle angegebenen Molekulargewichte solche, die mittels Endgruppenanalyse bestimmt wurden.

Bei den Alkenylethern kann es sich um aliphatische Verbindungen handeln, welche außer der oder den Alkenylethergruppe(n) mindestens eine andere funktionelle Gruppen enthalten, die reaktiv gegenüber Epoxy bzw. Cyclocarbonatgruppen ist, darunter -OH, -COOH, -SH, -NH₂ und deren Derivate. Die funktionellen Gruppen greifen nucleophil am Ringkohlenstoff des Epoxidrings oder am Carbonyl-Kohlenstoffatom des Cyclocarbonats an, wobei sich der Ring öffnet und eine Hydroxylgruppe entsteht. In Abhängigkeit der reaktiven, nucleophilen Gruppe wird dabei, eine O-C-, N-C, S-C, oder O-/N-/S-C(=O)O-Bindung geknüpft.

Die Herstellung des Alkenyletherpolyols kann beispielsweise über zwei alternative Routen A) und B) realisiert werden.

Bei Route A) wird ein Alkenylether, der mindestens eine Alkenylethergruppe und mindestens eine funktionelle Gruppe ausgewählt aus -OH, -COOH, -SH, -NH₂ und deren Derivaten enthält, mit (i) einem Epoxid oder (ii) einem cyclischen Carbonat oder Derivat davon umgesetzt.

Bei Route B) wird ein Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, mit einem Alkohol, Thiol, einer Carbonsäure oder einem Amin oder Derivaten der vorgenannten umgesetzt. Die vorstehend genannten Alkohole, Thiole, Carbonsäuren und Amine können dabei mono- oder polyfunktionell sein.

Unabhängig von der Route entstehen die Alkenyletherpolyole durch Reaktion der Hydroxy-, Thiol-, Carboxyl- oder Aminogruppen mit einer Epoxid- oder cyclischen Carbonatgruppe unter Ringöffnung.

In allen Ausführungsformen werden die Reaktionspartner derart ausgewählt, dass das Reaktionsprodukt, d.h. das erhaltene Alkenyletherpolyol mindestens zwei Hydroxylgruppen trägt.

Beispielsweise wird das Alkenyletherpolyol hergestellt durch Umsetzen eines Alkenylethers, enthaltend mindestens eine Alkenylethergruppe und mindestens eine funktionelle Gruppe ausgewählt aus -OH, - COOH, -SH, -NH₂ und deren Derivaten, mit (i) einem Epoxid oder (ii) einem cyclischen Carbonat oder Derivat davon, wobei das derart hergestellte Alkenyletherpolyol ein Alkenyletherpolyol der Formel (I) ist 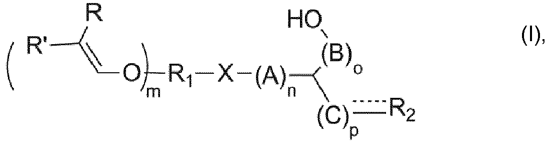 In den Verbindungen der Formel (I) ist

R₁ ein mindestens 2-wertiger organischer Rest, optional mit 1 bis 1000 Kohlenstoffatomen, insbesondere ein mindestens 2-wertiges lineares oder verzweigtes, substituiertes oder unsubstituiertes Alkyl mit 1 bis 50, vorzugsweise 1 bis 20 Kohlenstoffatomen, oder ein mindestens 2-wertiges lineares oder verzweigtes, substituiertes oder unsubstituiertes Heteroalkyl mit 1 bis 50, vorzugsweise 1 bis 20 Kohlenstoffatomen, und mindestens einem Sauerstoff- oder Stickstoffatom,

R₂ ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest und b 1 bis 100 ist.

In den Verbindungen der Formel (I) ist X O, S, C(=O)O, OC(=O)O, C(=O)OC(=O)O, NRₓ, NRₓC(=O)O, NRₓC(=O)NRₓ oder OC(=O)NRₓ. In bevorzugten Ausführungsformen ist X O, OC(=O)O, NRₓ oder NRₓC(=O)O.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R H und R' ist H oder -CH₃.

Jedes A, B und C ist unabhängig ausgewählt aus kohlenstoffhaltigen Gruppen der Formel CR"R"', wobei R" und R"' unabhängig ausgewählt sind aus H, einer funktionellen Gruppe, wie beispielsweise - OH, -NH₂, -NO₂, -CN, -OCN, -SCN, -NCO, -SCH, -SH, -SO₃H oder -SO₂H, und einem organischen Rest. Insbesondere sind R" und R"' unabhängig H oder C₁₋₂₀ Alkyl. R" und R"' können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S, -(CH₂)ₐₐ- mit aa = 3 bis 5 bzw. Derivate davon, in denen eine oder mehrere Methylengruppen durch Heteroatome wie N, O oder S ersetzt sind. Zwei von R" und R"', die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).
------ steht für eine Einfach- oder Doppelbindung. Wenn es für eine Doppelbindung steht, trägt das Kohlenstoffatom, das an R₂ gebunden ist nur einen Substituenten R" oder R"'.

In den Verbindungen der Formel (I) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

n, p und o sind jeweils 0 oder eine ganze Zahl von 1 bis 10. Dabei erfüllen sie die Bedingung n+p+o=1 oder mehr, insbesondere 1 oder 2. Es ist besonders bevorzugt, dass n oder o 1 ist und die anderen 0 sind. Alternativ ist besonders bevorzugt, dass n oder o 2 ist und die anderen 0 sind. Es ist ferner bevorzugt, dass p 0 ist und eines von n und o 1 oder 2 ist und das andere 0 ist. Ebenfalls bevorzugt sind Ausführungsformen, in denen n und o 1 sind und p 0 ist.

Rₓ ist H, ein organischer Rest oder

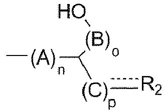

Damit das Alkenyletherpolyol mindestens zwei Hydroxylgruppen aufweist, erfüllt die Verbindung der

Formel (I) ferner die Bedingung, dass wenn Rₓ nicht 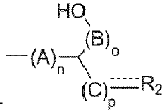 ist,

R₂ mindestens einen Substituenten aufweist, der ausgewählt ist aus -OH und

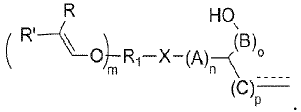

Die zweite Hydroxylgruppe der Verbindung der Formel (I) ist daher entweder als Substituent in dem organischen Rest R₂ enthalten oder X enthält einen weiteren Rest der Formel

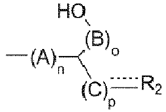

In verschiedenen Ausführungsformen des beschriebenen Herstellungsverfahren zur Darstellung eines Alkenyletherpolyols ist der Alkenylether, der mindestens eine Alkenylethergruppe und mindestens eine funktionelle Gruppe ausgewählt aus -OH, -COOH, -SH, -NH₂ und deren Derivaten enthält, ein Alkenylether der Formel (II).

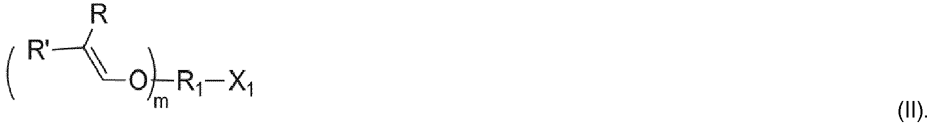

Ein solcher Alkenylether kann beispielsweise verwendet werden, um ein Alkenyletherpolyol der Formel (I) zu synthetisieren, indem er mit einem Epoxid oder einem cyclischen Carbonat umgesetzt wird.

In den Verbindungen der Formel (II) sind R₁, R, R' und m wie oben für Formel (I) definiert. Insbesondere sind die oben für die Verbindungen der Formel (I) beschriebenen bevorzugten Ausführungsformen von R₁, R, R' und m in gleicher Weise auf die Verbindungen der Formel (II) übertragbar.

In den Verbindungen der Formel (II) ist
X₁ eine funktionelle Gruppe ausgewählt aus -OH, -COOH, -SH, -NHR_{y} und deren Derivaten, und
R_{y} ist H oder ein organischer Rest, vorzugsweise H.

Die Derivate der funktionellen Gruppen -OH, -COOH, -SH, -NHR_{y} sind vorzugsweise die bereits oben im Zusammenhang mit der Definition des Begriffs beschriebenen ionischen Varianten, die sich durch Entfernen bzw. Bindung eines Protons ergeben, hierbei insbesondere die Alkoholate, Thiolate und Carboxylate, ganz besonders bevorzugt die Alkoholate.

Besonders bevorzugt ist X₁ -OH oder -O⁻ oder -NH₂.

Eine Ausführungsform des beschriebenen Verfahrens zur Herstellung der Alkenyletherpolyole ist weiterhin dadurch gekennzeichnet, dass in dem Alkenylether der Formel (II) m 1 ist, X₁ -OH oder -NH₂, vorzugsweise -OH, ist, R₁ ein zweiwertiger, linearer oder verzweigter C₁₋₁₀ Alkylrest (Alkylenylrest), insbesondere Ethylenyl, Propylenyl, Butylenyl, Pentylenyl oder Hexylenyl, ist, und eines von R und R' H und das andere H oder -CH₃ ist.

Bei den Alkenylethern, die im Rahmen der beschriebenen Verfahren zur Herstellung der Alkenyletherpolyole eingesetzt werden können, insbesondere denen der Formel (II), kann es sich z. B. um Reaktionsprodukte von verschiedenen optional substituierten Alkanolen (Monoalkohole und Polyole) mit Acetylen handeln. Konkrete Beispiele schließen ein, ohne darauf beschränkt zu sein, 4-Hydroxybutylvinylether (HBVE) und 3-Aminopropylvinylether (APVE).

Eine weitere Ausführungsform des beschriebenen Verfahrens zur Herstellung der Alkenyletherpolyole ist dadurch gekennzeichnet, dass das Epoxid, das mit dem Alkenylether umgesetzt wird, ein Epoxid der Formel (III) oder (IIIa) ist

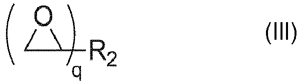

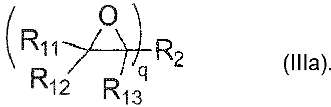

In Verbindungen der Formel (III) und (IIIa) ist R₂ wie oben für Formel (I) definiert.

R₁₁, R₁₂ und R₁₃ sind unabhängig voneinander H oder ein organischer Rest, optional mit mindestens einer -OH Gruppe, insbesondere ein lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom.

q ist eine ganze Zahl von 1 bis 10, vorzugsweise 1 oder 2.

Epoxyverbindungen, die in den Verfahren zur Herstellung von Alkenyletherpolyolen Anwendung finden können, sind demnach vorzugsweise lineare oder verzweigte, substituierte oder unsubstituierte Alkane mit einer Kohlenstoffatomanzahl von 1 bis 1000, vorzugsweise 1 bis 50 oder 1 bis 20, die mindestens eine Epoxygruppe tragen. Optional können diese Epoxyverbindungen zusätzlich noch eine oder mehrere Hydroxygruppen tragen, wodurch der Hydroxyl-Funktionalisierungsgrad des aus der Reaktion eines gegenüber Epoxiden reaktiven Alkenylethers, wie zuvor beschrieben, mit einem Epoxid entstandenen Alkenyletherpolyols hoch ist. Dadurch wiederum kann in späteren Polymerisierungsreaktionen die Quervernetzungsdichte des gewünschten Polymers kontrolliert und gesteuert werden.

Bei der Reaktion einer gegenüber Epoxiden reaktiven Alkenyletherverbindung (Alkenylether mit mindestens einer funktionellen Gruppe ausgewählt aus -OH, -COOH, -SH, -NH₂ und deren Derivaten) entsteht unter Ringöffnung des Epoxids ein Alkohol. Aus der Reaktionen eines ersten Alkohols oder einer in diesem Kontext chemisch verwandten Verbindung (Amin, Thiol, Carbonsäure, etc.) mit einem Epoxid wird somit die alkoholische Gruppe im Zuge der Bindungsknüpfung "regeneriert".

In verschiedenen Ausführungsformen kann die Epoxyverbindung mehr als eine Epoxygruppe tragen. Dies ermöglicht die Umsetzung einer solchen Epoxyverbindung mit mehr als einer gegenüber Epoxiden reaktiven Alkenyletherverbindung, beispielsweise einem Aminoalkenylether oder Hydroxyalkenylether.

In besonders bevorzugten Ausführungsformen ist das Epoxid ein Epoxid der Formel (III), wobei q 1 oder 2 ist, und wenn q 2 ist, R₂-CH₂-O-C₁₋₁₀-Alkylenyl-O-CH₂- ist, und wenn q 1 ist, R₂ -CH₂-O-C₁₋₁₀-Alkyl ist.

Beispiele für Epoxyverbindugen, die in den Herstellungsverfahren der Alkenyletherpolyole zum Einsatz kommen können, sind insbesonders Glycidylether, wie z.B., ohne Einschränkung, 1,4-Butandioldiglycidylether (BDDGE), Polyalkylenglycoldiglycidylether, Trimethylolpropanetriglycidylether, Bisphenol-A-diglycidylether (BADGE), Novolak basierte Epoxide und epoxidierte Polybutadiene oder Fettsäureester.

In verschiedenen Ausführungsformen, ist das Alkenyletherpolyol der Formel (I) durch Umsetzen eines Alkenylethers der Formel (II) mit einem Epoxid der Formel (III) oder (IIIa) darstellbar.

Anstelle eines Epoxids kann es sich bei den Verbindungen, die mit den gegenüber Epoxiden reaktiven Verbindungen (Alkenyletherverbindungen) umgesetzt werden, auch um cyclische Carbonate oder deren Derivate handeln. Cyclische Carbonatverbindungen unterliegen einer ähnlich den Epoxiden gearteten Reaktivität gegenüber den als Reaktionspartner dienenden Verbindungen, die sowohl Epoxide als auch cyclische Carbonatverbindungen unter Ringöffnung und "Regeneration" einer alkoholischen funktionellen Gruppe nucleophil am, im Falle eines Epoxids, Methylen des Epoxidrings, oder, im Falle eines cyclischen Carbonats, Carbonyl-Kohlenstoffatom addieren, wodurch, in Abhängigkeit des reaktiven, nucleophilen Restes, eine O-C-, N-C, S-C, oder O-/N-/S-C(=O)O-Bindung geknüpft wird.

Die cyclischen Carbonate, welche im beschriebenen Verfahren zur Herstellung der Alkenyletherpolyole mit einem Alkenylether, insbesondere einem Alkenylether der Formel (II), umgesetzt werden können, sind in bevorzugten Ausführungsformen Cyclocarbonate der Formel (IV) oder (IVa)

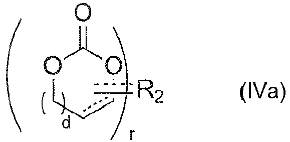

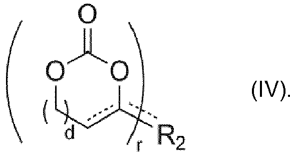

In Verbindungen der Formel (IV) und (IVa) ist R₂ wie für Formel (I), (III) und (IIIa) definiert. Insbesondere ist R₂ ein C₁₋₁₀ Hydroxyalkyl. In weiteren Ausführungsformen kann R₂ =CH₂ sein.
------ ist eine Einfach- oder Doppelbindung, vorzugsweise eine Einfachbindung. Es ist selbstverständlich, dass wenn der Ring eine Doppelbindung enthält, R₂ nicht über eine exo-Doppelbindung sondern über eine Einfachbindung gebunden ist und umgekehrt.

d ist 0, 1, 2, 3, 4 oder 5, vorzugsweise 0 oder 1, besonders bevorzugt 0, und r ist eine ganze Zahl von 1 bis 10, vorzugsweise 1 oder 2, ganz besonders bevorzugt 1.

Wenn d 1 ist, d.h. das Cyclocarbonat ein 1,3-Dioxan-2-on ist, kann R₂ in der 4- oder 5-Position sein, ist aber vorzugsweise in der 5-Position.

Beispielhafte cyclische Carbonate schließen ein, ohne darauf beschränkt zu sein, 1,3-Dioxolan-2-on, 4,5-Dehydro-1,3-Dioxolan-2-on, 4-Methylen-1,3-Dioxolan-2-on, und 1,3-Dioxan-2-on, die in der 4- bzw. 5-Position mit R₂ substituiert sind.

In verschiedenen Ausführungsformen der beschriebenen Verfahren zur Herstellung der Alkenyletherpolyole werden cyclische Carbonat eingesetzt, die Derivate der Carbonate der Formeln (IV) und (IVa) sind. Beispielhafte Derivate schließen solche ein, die an den Ring-Methylengruppen, insbesondere denen die nicht den R₂ Rest tragen, substituiert sind, beispielsweise mit organischen Resten, insbesondere linearen oder verzweigten, substituierten oder unsubstituierten Alkyl- oder Alkenylresten mit bis zu 20 Kohlenstoffatomen, insbesondere =CH₂ und -CH=CH₂, oder linearen oder verzweigten, substituierten oder unsubstituierten Heteroalkyl- oder Heteroalkenylresten mit bis zu 20 Kohlenstoffatomen und mindestens einem Sauerstoff- oder Stickstoffatom, oder funktionellen Gruppen, wie beispielsweise -OH oder -COOH. Beispiele für solche Derivate schließen beispielsweise 4-Methylen-1,3-Dioxolan-2-on, das an der 5-Position den R₂ Rest trägt, oder di-(Trimethylolpropan)dicarbonat, wobei der R₂ Rest in der 5-Position ein Methylen-Trimethylolmonocarbonatrest ist.

In verschiedenen Ausführungsformen in denen der R₂ Rest über eine Einfachbindung gebunden ist, kann das Ring-Kohlenstoffatom, dass den R₂ Rest trägt mit einem weiteren Substituenten, der wie die oben genannten Substituenten für die anderen Ring-Methylengruppe definiert ist, substituiert sein. Weitere Derivate sind solche in denen eines oder beide der Ring-Sauerstoffatome durch Schwefelatome ersetzt sind sowie solche in denen alternativ oder zusätzlich das Carbonyl-Sauerstoffatom durch ein Schwefelatom ersetzt ist. Ein besonders bevorzugtes Derivat ist das 1,3-Oxathiolan-2-thion.

In verschiedenen Ausführungsformen ist das cyclische Carbonat 4-Methylen-1,3-Dioxolan-2-on, das an der 5-Position den R₂ Rest trägt. Wenn ein solches cyclisches Carbonat mit einem Alkenylether umgesetzt wird, der als reaktive Gruppe eine Aminogruppe trägt, kann sich eine Verbindung der Formel (la) bilden:

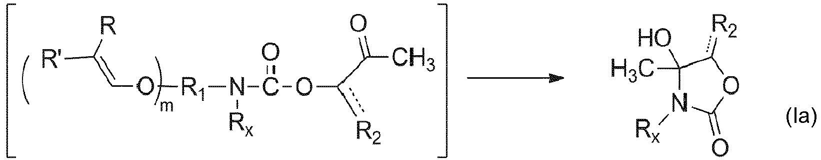

In dieser Verbindung sind m, R₁, R, R', R₂ und Rₓ wie oben für die Verbindungen der Formel (I)-(IV) definiert. Diese Verbindungen der Formel (la) enthalten keine Alkenylethergruppe und können daher zwar als Polyole für die Herstellung von Polyurethanen oder Polyestern verwendet werden, allerdings nur in Kombination mit weiteren Polyolen, die Alkenylethergruppen enthalten. Solche Verbindungen der Formel (la) sind daher erfindungsgemäß nicht bevorzugt.

Bei der Umsetzung der vorstehend beschriebenen Cyclocarbonate und deren Derivate der Formeln (IV) und (IVa) mit einer Verbindung der Formel (II), ist in verschiedenen Ausführungsformen in den Verbindungen der Formel (II) (i) X₁ -NH₂ oder ein Derivat davon, und in der Verbindung der Formel (IV) oder (IVa) ist r 1; oder (ii) X₁ ist -OH oder ein Derivat davon, und in der Verbindung der Formel (IV) oder (IVa) ist r 2.

In verschiedenen Ausführungsformen der Erfindung sind Alkenyletherpolyole bevorzugt, die mindestens eine Urethangruppe enthalten. Diese sind darstellbar durch Umsetzen der oben definierten Alkenylether die als reaktive Gruppe eine Aminogruppe tragen mit den beschriebenen zyklischen Carbonaten.

In weiteren Ausführungsformen ist das Alkenyletherpolyol durch Umsetzen der in Route B) aufgeführten Verbindungen darstellbar. Dabei wird das Alkenyletherpolyol hergestellt durch Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

In verschiedenen Ausführungsformen dieses Verfahrens ist das Alkenyletherpolyol ein Alkenyletherpolyol der Formel (V)

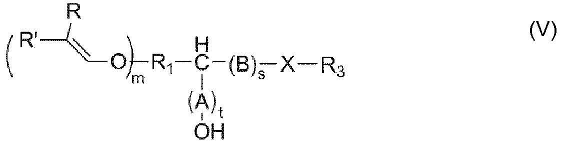

In den Verbindungen der Formel (V) ist R₁ wie oben für die Verbindungen der Formel (I) definiert. R₃ ist ein organischer Rest, optional mit mindestens einer -OH Gruppe und/oder 1 bis 1000 Kohlenstoffatomen, insbesondere ein (optional 2- oder mehrwertiges) lineares oder verzweigtes, substituiertes oder unsubstituiertes Alkyl mit 1 bis 50, vorzugsweise 1 bis 20 Kohlenstoffatomen oder ein (optional 2- oder mehrwertiges) lineares oder verzweigtes, substituiertes oder unsubstituiertes Heteroalkyl mit 1 bis 50, vorzugsweise 1 bis 20 Kohlenstoffatomen und mindestens einem Sauerstoff- oder Stickstoffatom. R₂ kann aber auch ein hochmolekularer Rest, wie beispielweise ein Polyalkylenglykolrest sein. Ein solcher (Poly)alkylenglykolrest kann beispielsweise die Formel -O-[CHRₐCH₂O]_{b}-R_{b} aufweisen, wobei Rₐ H oder ein C₁₋₄-Alkylrest, R_{b} -H oder ein organischer Rest oder 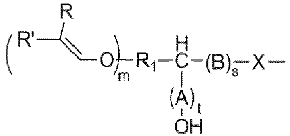 ist und b 1 bis 100 ist.

In den Verbindungen der Formel (V) ist X O, S, OC(=O), OC(=O)O, OC(=O)OC(=O), NR_{z}, NR_{z}C(=O)O, NR_{z}C(=O)NR_{z} oder OC(=O)NR_{z}. In bevorzugten Ausführungsformen ist X O, OC(=O)O, NR_{z} oder OC(=O)NR_{z}.

Jedes R und R' ist unabhängig ausgewählt aus H, C₁₋₂₀ Alkyl und C₂₋₂₀ Alkenyl, wobei insbesondere eines von R und R' H und das andere C₁₋₄ Alkyl oder beide H sind. Besonders bevorzugt ist R H und R' ist H oder -CH₃.

Jedes A und B ist unabhängig ausgewählt aus CR"R"', wobei R" und R"' unabhängig ausgewählt sind aus H, einer funktionellen Gruppe, wie beispielsweise -OH, -NH₂, -NO₂, -CN, -OCN, -SCN, -NCO, -NCS, -SH, -SO₃H oder -SO₂H, und einem organischen Rest. Insbesondere sind R" und R"' unabhängig H oder C₁₋₂₀ Alkyl. R" und R"' können aber auch gemeinsam oder zusammen mit dem Kohlenstoffatom an das sie gebunden sind einen organischen Rest, einschließlich zyklischer Reste, oder eine funktionelle Gruppe bilden. Beispiele für solche Reste sind =CH₂, =CH-Alkyl oder =C(Alkyl)₂, =O, =S,-(CH₂)ₐₐ- mit aa = 3 bis 5 bzw. Derivate davon, in denen eine oder mehrere Methylengruppen durch Heteroatome wie N, O oder S ersetzt sind. Zwei von R" und R"', die an benachbarte Kohlenstoffatome gebunden sind, können aber auch zusammen eine Bindung bilden. Dadurch wird zwischen den beiden benachbarten Kohlenstoffatome eine Doppelbindung ausgebildet (d.h. -C(R")=C(R")-).

In den Verbindungen der Formel (V) ist m eine ganze Zahl von 1 bis 10, vorzugsweise 1 oder 2, besonders bevorzugt 1. D.h. die Verbindungen tragen vorzugsweise nur eine oder 2 Alkenylethergruppe(n).

s und t sind jeweils 0 oder eine ganze Zahl von 1 bis 10. Dabei erfüllen sie die Bedingung s+t=1 oder mehr, insbesondere 1 oder 2. Es ist besonders bevorzugt, dass s oder t 1 ist und die andere 0 ist.

R_{z} ist H, ein organischer Rest oder

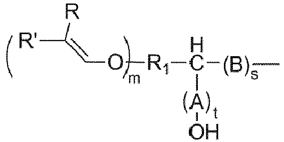

Damit das Alkyletherpolyol der Formel (V) die Bedingung erfüllt, dass es mindestens zwei

Hydroxylgruppen trägt, ist wenn R_{z} nicht 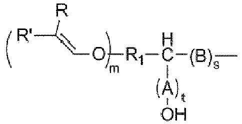 ist,
R₃ mit mindestens einem Substituenten substituiert, der ausgewählt ist aus -OH und

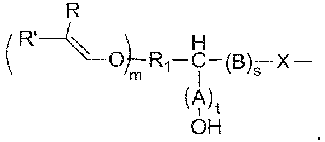

In weiteren bevorzugten Ausführungsformen ist das Verfahren dadurch gekennzeichnet, dass der Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, ein Alkenylether der Formel (VI) oder (VII) ist

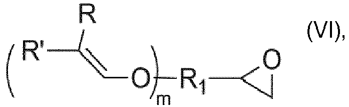

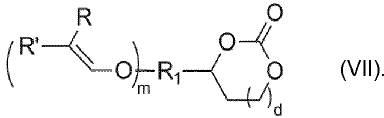

In den Verbindungen der Formel (VI) oder (VII) sind R₁, R, R' und m wie oben für die Verbindungen der Formeln (I) und (II) definiert.

d ist wie oben für die Formeln (IV) und (IVa) definiert, d.h. d ist 0, 1, 2, 3, 4 oder 5, vorzugsweise 0 oder 1, besonders bevorzugt 0.

In besonders bevorzugten Ausführungsformen ist R₁ in den Alkenylethern der Formel (VI) oder (VII) -C₁₋₁₀-Alkylenyl-O-CH₂-.

Die Epoxygruppen tragenden Alkenylether der Formel (VI) können am Epoxyrest substituiert sein, d.h. die Methylengruppen des Oxiranrings können, wie in Formel (IIIa) gezeigt, mit R₁₁-R₁₃ substituiert sein.

In verschiedenen Ausführungsformen sind die Alkenylether der Formel (VII) am Cyclocarbonatring substituiert oder der Cyclocarbonatring ist durch ein entsprechendes Derivat ersetzt. Geeignete substituierte Cyclocarbonate sowie Derivate davon sind solche, die oben im Zusammenhang mit Formel (IV) und (IVa) beschrieben wurden. Insbesondere ist der Cyclocarbonatrest vorzugsweise ein 1,3-Dioxolan-2-on- oder 1,3-Dioxan-2-on-Rest, der ggf. substituiert sein kann, beispielsweise mit einer Methylengruppe.

Geeignete Verbindungen der Formel (VI) schließen ein, ohne darauf beschränkt zu sein, Vinylglycidylether und 4-Glycidylbutylvinylether (GBVE), wobei letzterer durch Umsetzen von 4-Hydroxybutylvinylether mit Epichlorhydrin darstellbar ist.

Geeignete Verbindungen der Formel (VII) schließen ein, ohne darauf beschränkt zu sein, 4-(Ethenyloxymethyl)-1,3-Dioxolan-2-on, das beispielsweise durch Umesterung von Glycerincarbonat mit Ethylvinylether darstellbar ist oder 4-Glycerincarbonatbutylvinylether (GCBVE), das durch Epoxidierung von Hydroxybutylvinylether (HBVE) und anschließende CO₂-Insertion darstellbar ist.

In verschiedenen Ausführungsformen wird der Alkenylether, der mindestens eine Alkenylethergruppe und mindestens eine funktionelle Gruppe ausgewählt aus (i) Epoxidgruppen und (ii) cyclischen Carbonatgruppen oder Derivaten davon enthält, insbesondere einer der Formel (VI) oder (VII) mit einem Alkohol oder Amin umgesetzt. Bei dem Alkohol kann es sich um ein Diol oder Polyol oder ein entsprechendes Alkoholat handeln. Insbesondere kann der Alkohol ein Polyalkylenglykol der Formel HO-[CHRₐCH₂O]_{b}-H sein, wobei Rₐ H oder ein C₁₋₄-Alkylrest und b 1 bis 100, insbesondere 1 bis 10, ist.

Route B) stellt somit eine alternative Ausführungsform dar, in der die Epoxid- oder die cyclischen Carbonatverbindungen (beispielsweise Ethylencarbonat- oder Trimethylencarbonatverbindungen) mindestens eine oder mehrere Alkenylethergruppen aufweisen. Die Umsetzung dieser Epoxid- oder cyclischen Carbonatverbindungen mit gegenüber Epoxiden oder im Kontext dieser Erfindung chemisch ähnlich reagierenden Verbindungen (cyclische Carbonate) reaktiven Verbindungen, insbesondere solchen, die -OH, -COOH, -SH, -NH₂ und ähnliche Gruppen oder deren Derivate tragen - beispielsweise entsprechend funktionalisierte, vorzugsweise mehrfach entsprechend funktionalisierte lineare oder verzweigte, gesättigte oder teilweise ungesättigte, zusätzlich substituierte oder unsubstituierte, zyklische oder lineare (Hetero)Alkyle und (Hetero)Aryle - ergibt die gewünschten Alkenyletherpolyole.

Beispiele für Verbindungen, die mindestens eine der Gruppen -OH, -COOH, -SH, -NH₂ und deren derivatisierte Formen aber keine Alkenylethergruppen aufweisen, sind beispielsweise, ohne Einschränkung, Glykole, Polyglykole, Aminosäuren, Polyole und Di- und Polyamine, wie z.B. Glycin, Glycerol, Hexamethylendiamin, 1,4-Butandiol und 1,6-Hexandiol.

In verschiedenen Ausführungsformen sind Alkenyletherpolyole mit mindestens einer Urethangruppe, die sich durch Umsetzen von einem Alkenylether mit zyklischen Carbonatgruppen und einem Amin darstellen lassen, bevorzugt.

Bei den mittels der beschriebenen Verfahren herstellbaren oder erhältlichen Alkenyletherpolyole handelt es sich beispielsweise um Verbindungen der Formeln (I), (la) und (V), wie oben definiert.

In verschiedenen Ausführungsformen der Alkenyletherpolyole der Formel (I) ist:
(1) m = 1; R und R' sind H oder R ist H und R' ist Methyl; R₁ ist C₁₋₁₀ Alkylenyl, insbesondere C₁₋₆ Alkylenyl, X ist O, A und B sind CH₂, n und o sind 1 oder 0 und p ist 0, wobei n+o=1, und R₂ ist ein organischer Rest, der mit -OH substituiert ist oder einen weiteren Rest der Formel 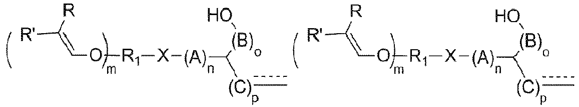 trägt wobei R₁, m, R, R', A, B, C, n, o und p wie vorstehend definiert sind; oder
(2) m = 1; R und R' sind H oder R ist H und R' ist Methyl; R₁ ist C₁₋₁₀ Alkylenyl, insbesondere C₁₋₆ Alkylenyl, X ist NRₓ, A und B sind CH₂, n und o sind 1 oder 0 und p ist 0, wobei n+o=1, Rₓ ist H
   oder 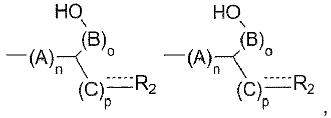 wobei A, B, C, n, o und p wie vorstehend definiert sind;
   und R₂ ist ein organischer Rest wie oben definiert, der wenn Rₓ H ist mit -OH substituiert ist oder einen weiteren Rest der Formel 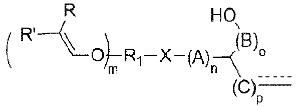 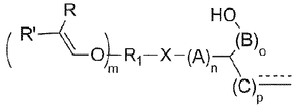 trägt wobei R₁, m, R, R', A, B, C, n, o und p wie vorstehend definiert sind; oder
(3) m = 1; R und R' sind H oder R ist H und R' ist Methyl; R₁ ist C₁₋₁₀ Alkylenyl, insbesondere C₁₋₆ Alkylenyl, X ist OC(=O)O, A und B sind CH₂, n und o sind 1 oder 0 und p ist 0, wobei n+o=1, und R₂ ist ein organischer Rest, der mit -OH substituiert ist oder einen weiteren Rest der Formel 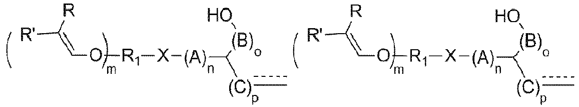 trägt wobei R₁, m, R, R', A, B, C, n, o und p wie vorstehend definiert sind; oder
(4) m = 1; R und R' sind H oder R ist H und R' ist Methyl; R₁ ist C₁₋₁₀ Alkylenyl, insbesondere C₁₋₆ Alkylenyl, X ist NRₓC(=O)O, A und B sind CH₂, n und o sind 1 oder 0 und p ist 0, wobei n+o=1, Rₓ ist H oder 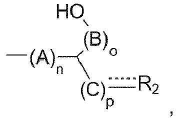 wobei A, B, C, n, o undp wie vorstehend definiert sind; und R₂ ist ein organischer Rest wie oben definiert, der wenn Rₓ H ist mit -OH substituiert ist oder einen
   weiteren Rest der Formel 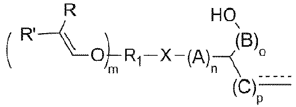 trägt wobei R₁, m, R, R', A, B, C, n, o und p wie vorstehend definiert sind.

In den vorstehend genannten Ausführungsformen ist R₂ vorzugsweise über eine Einfachbindung gebunden und kann beispielsweise ein Heteroalkylrest, insbesondere ein Alkyletherrest mit 2 bis 10 Kohlenstoffatomen sein. Geeignet sind beispielsweise Reste der Formel -CH₂-O-(CH₂)₄-O-CH₂- (für den Fall, dass R₂ zwei Alkenyletherreste der obigen Formel trägt) oder -CH₂-O-CH(CH₃)₂.

In verschiedenen Ausführungsformen der Alkenyletherpolyole der Formel (V) ist:
(1) m = 1; R und R' sind H oder R ist H und R' ist Methyl; R₁ ist -(CH₂)₁₋₁₀-O-CH₂-, insbesondere -(CH₂)₁₋₆-O-CH₂-, X ist O, A und B sind CH₂, s und t sind 1 oder 0, wobei s+t=1, und R₃ ist ein organischer Rest, der mit -OH substituiert ist oder einen weiteren Rest der Formel 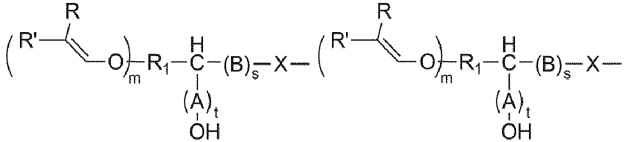 trägt wobei R₁, m, R, R', A, B, s und t wie vorstehend definiert sind; oder
(2) m = 1; R und R' sind H oder R ist H und R' ist Methyl; R₁ ist -(CH₂)₁₋₁₀-O-CH₂-, insbesondere -(CH₂)₁₋₆-O-CH₂-, X ist NR_{z}, A und B sind CH₂, s und t sind 1 oder 0, wobei s+t=1, R_{z} ist H oder 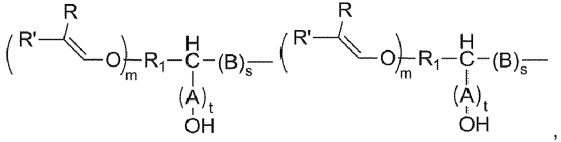 wobei A, B, m, s und t wie vorstehend definiert sind; und R₃ ist ein organischer Rest wie oben definiert, der wenn R_{z} H ist mit -OH substituiert ist oder einen weiteren Rest der Formel 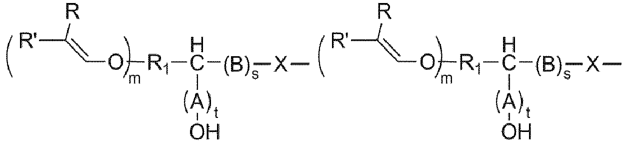 trägt wobei R₁, m, R, R', A, B, s und t wie vorstehend definiert sind; oder
(3) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)O, A und B sind CH₂, s und t sind 1 oder 0, wobei s+t=1, und R₃ ist ein organischer Rest, der mit -OH substituiert ist oder einen weiteren Rest der Formel 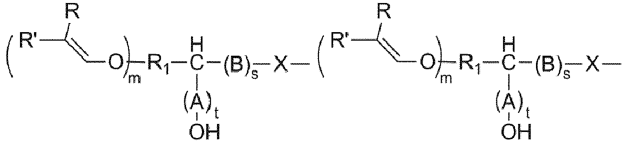 trägt wobei R₁, m, R, R', A, B, s und t wie vorstehend definiert sind; oder
(4) m = 1; R und R' sind H oder R ist H und R' ist Methyl; R₁ ist -(CH₂)₁₋₁₀-O-CH₂-, insbesondere -(CH₂)₁₋₆-O-CH₂-, X ist OC(=O)NR_{z}, A und B sind CH₂, s und t sind 1 oder 0,
   wobei s+t=1, R_{z} ist H oder 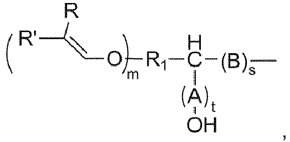 wobei A, B, m, s und t wie vorstehend definiert sind; und R₃ ist ein organischer Rest wie oben definiert, der wenn R_{z} H ist mit -OH
   substituiert ist oder einen weiteren Rest der Formel 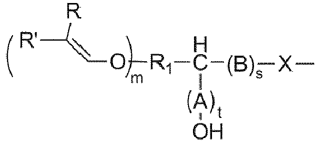 trägt
   wobei R₁, m, R, R', A, B, s und t wie vorstehend definiert sind.

In den vorstehend genannten Ausführungsformen der Verbindungen der Formel (V) ist R₃ beispielsweise ein Heteroalkylrest, insbesondere ein (Poly)Alkylenglykol, wie insbesondere Polypropylenglykol, oder ein C₁₋₁₀ Alkyl- oder Alkylenylrest.

Die Durchführung der einzelnen Stufen des beschriebenen Verfahrens zur Herstellung der Alkenyletherpolyole der Formel (I) oder (V) kann nach den für solche Reaktionen üblichen Methoden erfolgen. Dazu werden die Reaktionspartner, ggf. nach Aktivierung (beispielsweise Herstellung von Alkoholaten durch Umsetzen mit Natrium, miteinander in Kontakt gebracht und ggf. unter Schutzgasatmosphäre und Kontrolle der Temperatur umgesetzt.

Die vorstehend beschriebenen Alkenyletherpolyole werden dann für die Synthese von Polymeren, insbesondere Polyurethanen oder Polyestern, durch Umsetzen mit Polyisocyanaten oder Polycarbonsäuren oder Polycarbonsäurederivaten, wie deren Estern, insbesondere Alkylestern, eingesetzt. Je nachdem welche Komponente im Überschuß eingesetzt wird, lassen sich so OH- oder NCO-terminierte Polyurethane mit Alkenyletherseitenketten bzw. OH- oder COOR-terminierte Polyester, mit R = H oder Alkyl, mit Alkenyletherseitenketten erhalten. Die Alkenyletherpolyole können bei der Synthese auch in Kombination mit anderen, nicht Alkenylether-funktionalisierten Polyolen eingesetzt werden. Über die eingesetzten Mengen lässt sich die Funktionalität der erhaltenen Polymere steuern. Die so erhaltenen Polymere haben vorzugsweise eine Alkenyletherfunktionalität im Bereich von 1 bis 1000, vorzugsweise 1 bis 20. Die NCO- oder COOR-terminierten Polymere werden vorzugsweise mit Vinylethergruppen-haltigen monofunktionellen Alkoholen endgruppenverkappt. Alternativ können OH-terminierte Polymere mit Vinylethergruppen-haltigen monofunktionellen Isocyanaten endgruppenverkappt werden.

Um die Acetal-haltigen Polymere zu erhalten, werden diese Polymere mit Alkenyletherseitenketten dann unter stark sauren Bedingungen und in Abwesenheit von Wasser mit einem mono- oder polyfunktionellen Alkohol umgesetzt, wobei die Hydroxylgruppe(n) des Alkohols mit den Alkenylethergruppen des Polymers in einer Transferreaktion reagieren und Acetale bilden. Wird die Reaktion mit einem stöchiometrischen Unterschuss von Alkohol durchgeführt, findet parallel zu der Additionsreaktion eine kationische Polymerisation der Alkenylethergruppen statt, die durch Exposition gegenüber Strahlung und geeignete Photoinitiatoren initiert werden kann. Wie bereits oben erwähnt, wird dieser zweifache Vernetzungsmechanismus hierin als "kationische Phototransferpolymerisation" bezeichnet. Während die Substöchiometrie bevorzugt ist, um die Bildung von Polyvinylethern zu erzwingen, wurde gefunden, dass diese auch bereits gebildet werden, bevor der Alkohol abreagiert ist, so dass auch ein mäßiger Überschuss an Alkohol noch zu nur partiell degradierbaren Materialien führt.

Während das molare Verhältnis von Alkenylethergruppen zu Hydroxylgruppen im Bereich von 0,01 bis 100, vorzugsweise 0,1 bis 10,0, noch bevorzugter 0,2 bis 5,0, noch weiter bevorzugt 0,8 bis 4,0, noch weiter bevorzugt 1,0 bis 2,0 liegen kann, wird in verschiedenen Ausführungsformen der Verfahren der Erfindung die Reaktion in Gegenwart von substöchiometrischen Mengen an Alkohol relativ zu den Alkenylethergruppen durchgeführt. "Substöchiometrisch" bedeutet hierbei ein molares Verhältnis von Alkenyethergruppen zu Hydroxylgruppen von mehr als 1, insbesondere 1,1 bis 10, vorzugsweise 1,2 bis 3,0, noch bevorzugter 1,3-2,0. Wie allerdings oben erwähnt, können auch leichte Überschüsse an Hydroxylgruppen noch zu zweifachen Vernetzungen führen. Daher sind in verschiedenen Ausführungsformen auch molare Verhältnisse von Alkenyethergruppen zu Hydroxylgruppen von mindestens 0,8, vorzugsweise mindestens 0,9, noch bevorzugter 0,95 bevorzugt, wobei die Obergrenze beispielsweise 10, vorzugsweise 3,0, noch bevorzugter 2,0, am bevorzugtesten 1,5 betragen kann.

Als Reaktionsbedingungen werden in verschiedenen Ausführungsformen saure bzw. stark saure und wasserfreie Bedingungen eingesetzt. Um eine parallele kationische Polymerisation zu ermöglichen, kann die Reaktion vorzugsweise in Anwesenheit von einem oder mehreren geeigneten Photoinitiatoren und unter Strahlungsexposition, insbesondere Licht- oder UV-Exposition, erfolgen.

Die so erhaltenen Polymere sind zum einen über die Polymerisation der Alkenylethergruppen miteinander vernetzt und enthalten ferner Acetale, wobei die zur Acetalbildung eingesetzten polyfunktionellen Alkohole ebenfalls eine Vernetzung der Polymere bewirken. Während die gebildeten Acetale säurelabil sind und in Anwesenheit von Wasser und bei niedrigen pH-Werten hydrolysiert werden, sind die polymerisierten Alkenylethergruppen säurestabil. Dadurch wird ein nur partieller Abbau der Polymere und dadurch wiederum eine Modulation der mechanischen und rheologischen Eigenschaften möglich, wie zum Beispiel eine Freisetzung der über die Acetale gebundenen Hydroxylverbindungen.

Dabei sind die eingesetzten Alkohole Verbindungen, die mindestens eine Hydroxylgruppe aufweisen.

Monofunktionelle Alkohole ergeben Acetal-haltige Polymere, die die Alkoholreste als Seitenketten enthalten. In verschiedenen Ausführungsformen sind diese monofunktionellen Alkohole Verbindungen, die eine Hydroxylgruppe aufweisen, und optional eine weitere Funktion haben, beispielsweise als pharmazeutisch aktive Wirkstoffe. Diese Verbindungen, die unter Acetalbildung an das Polymerrückgrat gebunden sind, können dann mittels Hydrolyse, beispielsweise in wässrigen Lösungen, pH-kontrolliert freigesetzt werden. Dementsprechend können die hierin beschriebenen Acetal-haltigen Polymere als "controlled release" Mittel eingesetzt werden, wobei die freizusetzende Verbindung der monofunktionelle Alkohol ist. Die Art der auf dieser Weise gebundenen Verbindungen ist nicht limitiert abgesehen davon, dass sie mindestens eine Hydroxylgruppe aufweisen und nicht anderweitig in unerwünschter Art und Weise mit dem Polymerrückgrat interagieren dürfen.

Di- und höherfunktionelle Alkohole ergeben ebenfalls Acetal-haltige Polymere, die dann über die Alkoholreste reversibel vernetzt sind. Über die Funktionalität der Alkohole lässt sich dann der Vernetzungsgrad der Polymere kontrollieren. Da auch diese Vernetzung reversibel ist und die polyfunktionellen Alkohole durch Hydrolyse freigesetzt werden können, lässt sich über die Kontrolle der Vernetzung auch eine Kontrolle der mechanischen und rheologischen Eigenschaften der Polymere erzielen. Darüber hinaus ist, wie auch beim Einsatz der monofunktionellen Alkohole, eine kontrollierte Freisetzung der höherfunktionellen Alkohole denkbar. Das bedeutet, dass in verschiedenen Ausführungsformen auch die höherfunktionellen Alkohole eine weitere Funktion, die über die reine Vernetzungsfunktion hinausgeht, wie beispielsweise eine Wirkstofffunktion haben können.

In verschiedenen Ausführungsformen der Erfindung ist der mono- oder polyfunktionelle Alkohol eine Verbindung der Formel (VI)

R₄(OH)ᵤ (VI)

wobei R₄ ein ein- oder mehrwertiger organischer Rest ist, insbesondere ein ein- oder zweiwertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom; und u eine ganze Zahl von 1 bis 10, vorzugsweise 1 bis 4 ist.

Der Rest R₄ ist insbesondere dann ein Alkyl- oder Heteroalkylrest wenn er primär zur Kontrolle der Verzweigung und damit der Polymereigenschaften dient. In anderen Ausführungsformen, wie oben beschrieben, in denen die über die Acetale gebundene Verbindung eine weitere Funktion hat, beispielsweise als pharmazeutischer oder kosmetischer Wirkstoff, ist der Rest R⁴ dementsprechend ein entsprechender Wirkstoffrest. Da die Möglichkeiten einer solchen Wirkstoffkopplung prinzipiell extrem vielfältig sind, da abgesehen von den notwendigen Hydroxylgruppen und der Kompatibilität mit dem Polymer, keine weiteren Einschränkungen bestehen, ist der Wirkstoff nicht auf einen bestimmten Wirkstoff oder eine bestimmte Gruppe von Wirkstoffen beschränkt. Neben den erwähnten kosmetischen und pharmazeutischen Wirkstoffen, können auch beliebige andere Wirkstoffe, die andere Funktionen haben, eingesetzt werden.

In verschiedenen Ausführungsformen kann der mono- oder polyfunktionelle Alkohol ein Hydroxylgruppen-haltiges Polymer sein, insbesondere ein Polyvinylalkohol, vorzugsweise mit einer Funktionalität von 1 bis 1000.

Die stark sauren Bedingungen werden vorzugsweise durch Einsatz von geeigneten Säuren bzw. Supersäuren erzeugt.

Generell sind für die strahlungsabhängige Härtungsreaktion alle im Stand der Technik bekannten Photoinitiatoren geeignet. Diese können optional auch in Kombination mit bekannten Sensitizern eingesetzt werden. Ein Überblick über geeignete Initiatoren, insbesondere lodonium- und Sulfoniumbasierte Verbindungen, besonders solche mit Anionen, die ausgewählt werden aus Hexafluorophosphate (PF₆⁻), Tetrafluoroborat (BF₄⁻) und Hexafluoroantimonat (SbF₆⁻), findet sich beispielsweise in Sangermano et al. (Macromol. Mater. Eng. 2014, 299, 775-793).

Derartige Photoinitiatoren ermöglichen die gleichzeitige kationische Polymerisation der Alkenyl-/Vinylgruppen sowie die Acetalbildung durch die Additionsreaktion der Alkohole.

In verschiedenen Ausführungsformen des erfindungsgemäßen Verfahrens, werden die Reaktionspartner, d.h. die Alkenylethergruppe-haltigen Polymere und die Alkohole, in Anwesenheit eines Photoinitiators, wie z.B. 4,4'-Dimethyldiphenyliodoniumhexafluorophosphat (Omnicat 440, IGM) durch Exposition gegenüber elektromagnetischer Strahlung zur Reaktion gebracht. Bei dem Reaktionsmechanismus handelt es sich um eine kationische Polymerisation der Alkenylgruppen sowie eine Addition der Alkohole, wobei letztere bei einer Funktionalität von 2 oder mehr auch als vernetzende Polyaddition angesehen werden kann. Die Reaktion kann in Lösung in einem geeigneten organischen Lösungsmittel, wie z.B. THF, erfolgen, da dabei die Reaktionskontrolle einfacher sein kann. Die elektromagnetische Strahlung kann insbesondere sichtbares Licht oder UV-Licht sein und wird in Abhängigkeit der eingesetzten Photoinitiatoren gewählt.

Nach Abschluss der Reaktion kann eine Neutralisation der restlichen Säuren erfolgen. Hierzu können alle dem Fachmann für diesen Zweck geeigneten Neutralisationsmittel eingesetzt werden. Zusätzlich oder alternativ können die erhaltenen Systeme durch geeignete Puffer gegenüber einem Abbau durch Reste der Säuren stabilisiert bzw. abgepuffert werden.

Die Erfindung betrifft schließlich auch die mittels der hierin beschriebenen Verfahren herstellbaren Polymere, die Acetale enthalten. Diese Polymere können in Abhängigkeit der Art und Menge der eingesetzten Alkohole, insbesondere beim Einsatz mehrwertiger Alkohole und substöchiometrischer Mengen der Alkohole, vernetzte Polymere sein. Die Polymere können auch in Form von wasserbasierten Dispersionen, insbesondere Polyurethandispersionen (PUD), bereitgestellt werden, wobei der pH-Wert dieser Dispersionen so kontrolliert werden muss, dass es nicht zu einer (vorzeitigen) Hydrolyse der Acetale kommt.

Die so erhaltenen Polymere weisen Acetale auf, die unter geeigneten Bedingungen hydrolysiert werden können. Dazu sind beispielsweise wässrige Lösungen mit pH-Werten unter 7, vorzugsweise 5 oder niedriger, noch bevorzugter 4 oder niedriger, am meisten bevorzugt 3 oder niedriger geeignet. Generell ist die Anwesenheit einer Säure, vorzugsweise einer ausreichend starken Säure mit einem pKₛ Wert von <4 bei Standardbedingungen (25°C, 1013 mbar), erforderlich. Die Erfindung betrifft daher in einem Aspekt auch Verfahren zur pH-abhängigen Degradierung eines Polymers wie hierin beschrieben, wobei die Acetale des Polymer unter geeigneten Bedingungen hydrolysiert werden, beispielsweise durch in Kontakt bringen mit einer wässrigen Lösung mit einem pH<7. "Degradierung" bedeutet somit in diesem Zusammenhang die Hydrolyse zuvor geknüpfter Bindungen und damit eine Umkehr der Vernetzungsreaktion insoweit diese über Acetalbildung abgelaufen ist. Auf dieselbe Art und Weise können durch Hydrolyse der Acetale unter geeigneten Bedingungen, die Alkohole wieder freigesetzt werden. Das ist, wie bereits oben beschrieben, insbesondere dann von Interesse wenn es sich bei den Alkoholen um Hydroxylgruppen tragende Wirkstoffe handelt, die weitere Funktionen haben. Die Erfindung betrifft daher auch Verfahren zur pH-abhängigen Freisetzung einer Hydroxylgruppen-haltigen Verbindung aus einem Polymer wie hierin beschrieben, wobei die Acetale des Polymer unter geeigneten Bedingungen hydrolysiert werden, beispielsweise durch in Kontakt bringen mit einer wässrigen Lösung mit einem pH<7.

Ferner erfasst die Erfindung auch Zusammensetzungen, die die hierin beschriebenen Polymere enthalten, insbesondere Klebstoffe, Dichtstoffe, Beschichtungsmittel, 3D-Druck-, Lithographiekosmetische oder pharmazeutische Zusammensetzungen.

Ebenfalls Gegenstand der Erfindung ist die Verwendung der hierin beschriebenen Polymere als Bestandteil von Klebstoffen, Dichtstoffen, Beschichtungsmitteln, kosmetischen oder pharmazeutischen Zusammensetzungen sowie in 3D-Druck und Lithographie-Anwendungen. Derartige Zusammensetzungen können ferner alle dem Fachmann bekannten üblichen Zusatz- und Hilfsstoffe enthalten.

Alle hierin im Zusammenhang mit den erfindungsgemäßen Verfahren zur Herstellung der Polymere offenbarten Ausführungsformen sind ebenso auf die beschriebenen Polymere als solche, sowie deren Verwendung und Verfahren zu deren Verwendung übertragbar und umgekehrt.

Die Erfindung wird im Folgenden anhand von Beispielen weiter veranschaulicht, wobei diese nicht als Einschränkung verstanden werden sollten.

### Beispiele

### Verwendete Materialien:

4-Hydroxybutylvinylether (HBVE) (BASF, 99% stabilisiert mit 0,01 % KOH) wurde über einem 4 A Molekularsieb gelagert. Natrium (Merck, 99%) wurde in Paraffinöl gelagert und die oxidierte Oberfläche entfernt. 1,4-Butandioldiglycidylether (BDDGE, Sigma-Aldrich, 95%), Isophorondiisocyanat (IPDI, Merck, 99%), Dimethylzinndineodecanoat (Momentive, Fomrez catalyst UL-28), Oktandiol (Acros Organics, 98%), Undekanol (Acros Organics, 98%) und 4,4'-Dimethyldiphenyliodoniumhexafluorophosphat (Omnicat 440, IGM, 98%) wurden wie erhalten verwendet.

### Beispiel 1: Synthese des Vinyletherpolyols

139,51 g (1,2 mol) HBVE wurden in einem 250 ml Rundkolben vorgelegt. Ein Tropftrichter mit Druckausgleich wurde angeschlossen und darin 24,78 g (0,12 mol) BDDGE vorgelegt. Die gesamte Apparatur wurde im Vakuum getrocknet und mit Stickstoff geflutet. 7,00 g (0,3 mol) Natrium wurden zugefügt. Nachdem das Natrium vollständig aufgelöst war, wurde BDDGE langsam zugegeben. Die Temperatur wurde so kontrolliert, dass sie 50 °C nicht überschritt. Nach vollständiger Zugabe von BDDGE wurde bei 50 °C über einen Zeitraum von 30 min gerührt. 50 ml Wasser wurden zugegeben, um das verbliebene Alkoholat zu hydrolysieren. Das Produkt wurde mehrere Male mit gesättigter Natriumchlorid-Lösung und Wasser gewaschen und im Vakuum aufkonzentriert, um gegebenenfalls Edukt- und Wasserrückstände zu entfernen. Ausbeute: 76 %. ¹H-NMR (CDCl₃), xy MHz): δ (pp) = 1,6-1,8 (12 H, mid-CH₂ Butyl), 2,69 (2 H, OH, H/D austauschbar), 3,4-3,55 (16 H, CH₂-O-CH₂), 3,70 (4 H, CH₂-O-vinyl), 3,94 (2 H, CH-O), 3,98 (1 H, CH₂=CH-O trans), 4,17 (1 H, CH₂=CH-O cis), 6,46 (1 H, CH₂=CH-O gemi).

### Beispiel 2: Synthese von Vinylether-funktionalisiertem Polyurethan (VEPU)

40,00 g (92 mmol) des in Beispiel 1 synthetisierten Vinyletherpolyols wurde in einen 250 ml Kolben gegeben, unter reduziertem Druck bei 75°C entgast und mit Stickstoff gespült. Bei 15°C wurden dann 23,28 g (105 mmol) Isophorondiisocyanat und 0,0127 g Dimethylzinndineodecanoat zugegeben und die Mischung langsam auf 80°C erwärmt. Nach einer Stunde Reaktionszeit wurden dann noch 2,651 g (25 mmol) HBVE als Endgruppenverkappungsmittel zugegeben und die Reaktion für 30 min fortgeführt. Es wurde ein Vinylether-funktionalisiertes Polyurethan mit einem zahlenmittleren theoretischen Molekulargewicht Mₙ von 5000 g/mol erhalten.

### Beispiel 3: Synthese von Acetal-haltigem Polymer

Das Polyurethan (VEPU) aus Beispiel 2 wurde in demselben Volumen Aceton aufgelöst und mit 2 Gew.-% Omnicat 440 als Photoinitiator bezogen auf das reine Polyurethan sowie Oktandiol oder Undekanol wie in Tabelle 1 angegeben formuliert. Das Lösungsmittel wurde dann unter reduziertem Druck (100 mbar) entfernt.

**Tabelle 1: Formulierungen von VEPU mit Oktandiol oder Undekanol**

| | m (VEPU) [g] | n (Vinylether) [mmol] | m (Alkohol) [g] | n (OH-Gruppen) [mmol] | m (Photoinitiator) [g] |
|---|---|---|---|---|---|
| VEPU/Oktandiol (1:0) | 3,00 | 9,49 | - | - | 0,06 |
| VEPU (Oktandiol (1:0,5) | 3,00 | 9,49 | 0,35 | 4,74 | 0,06 |
| VEPU/Oktandiol (1:1) | 3,00 | 9,49 | 0,69 | 9,49 | 0,06 |
| VEPU/Oktandiol (1:1,5) | 3,00 | 9,49 | 1,04 | 14,23 | 0,06 |
| VEPU/Undekanol (1:0,5) | 3,00 | 9,49 | 0,82 | 4,74 | 0,06 |

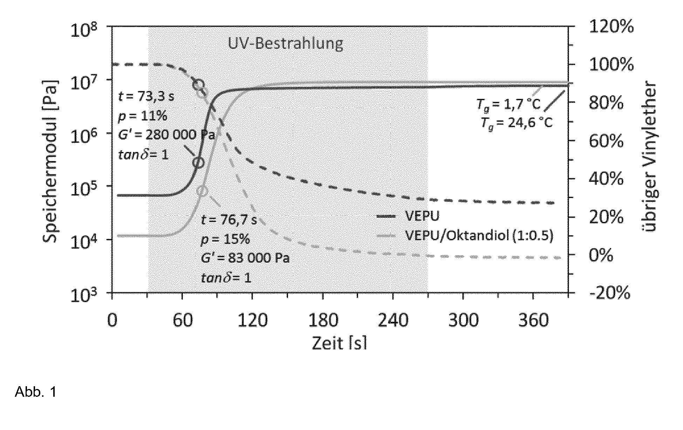

Die kationische Härtungsreaktion des Polymers in Anwesenheit von Oktandiol wurde in einem UV/NIR-Rheologie-Experiment durchgeführt. Das mechanische Speichermodul und der restliche Vinylethergehalt wurden gleichzeitig bei UV-Exposition bei 25°C aufgenommen und gegen die Zeit aufgetragen. Die Ergebnisse sind in Figur 1 gezeigt. Figur 1 zeigt die Speichermodule (gestrichelte Linien) und den restlichen Vinylethergehalt (durchgezogene Linien) der Härtungsreaktion von VEPU ohne Oktandiol und mit Oktandiol im molaren Verhältnis Vinylethergruppen/Hydroxylgruppen von 1:0,5 nach kurzer UV-Exposition bei 25°C. Der Gelbildungspunkt ist durch offene Kreise angezeigt. Die angegebenen Glasübergangstemperaturen T_{g} nach der Härtung wurden mittels DSC bestimmt.

Die Zugabe von Oktandiol zeigt eine positive Wirkung auf das Härtungsverhalten. Die Startviskosität wird um etwa eine Größenordnung verringert, und die molekulare Mobilität signifikant erhöht. Dadurch kann eine höhere Umwandlung der Vinylethergruppen erreicht werden, was auch das erhöhte mechanische Modul nach der Härtung erklärt. Obwohl theoretisch erwartet wurde, dass der Einbau der Polyolsegmente die mechanischen Eigenschaften verschlechtert, da die neu gebildeten Acetalbrücken vergleichsweise flexibel sind und daher einen weichmachenden Effekt haben sollten, wird dieser Effekt durch die höhere Umwandlung der Vinylethergruppen überkompensiert. Das Vorhandensein flexibler Bindungen und die weniger steife Vernetzung wird daneben durch die verringerte Glasübergangstemperatur angezeigt.

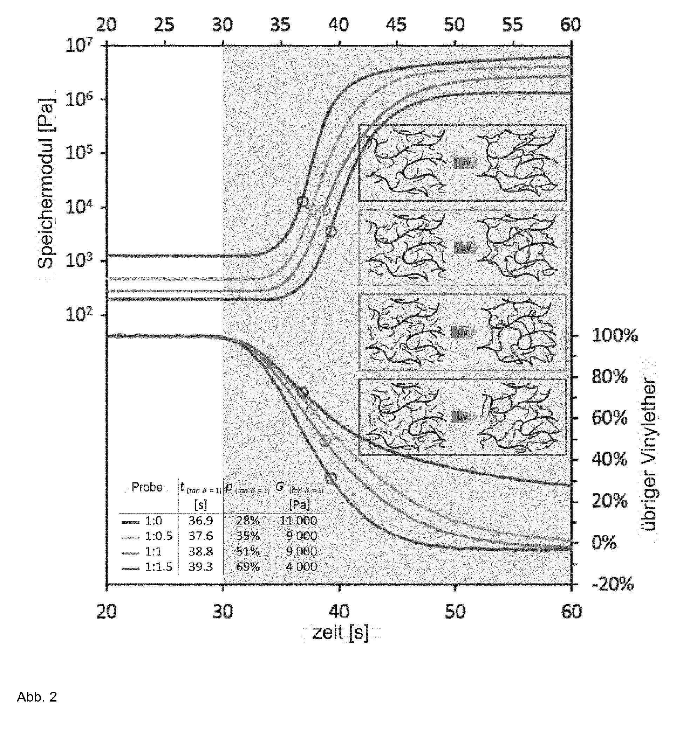

Um ein besseres Verständnis der kationischen Phototransferpolymerisation zu ermöglichen, wurden zusätzliche Proben mit variierender Stöchiometrie hergestellt und bei erhöhter Temperatur (70°C) gehärtet. Die Ergebnisse sind in Figur 2 dargestellt. Figur 2 zeigt die rheologischen Plots der Härtungsreaktion von VEPU und Oktandiol bei 70°C und geänderten Stöchiometrien. Die Gelbildung wird wiederum durch offene Kreise angezeigt. Die erhöhte Temperatur verhindert die Glasbildung der Proben und stellt einen ungehinderten Verlauf der Reaktion sicher. Es wurde der erwartete Trend von erniedrigten Plateauwerten für die Moduli mit erhöhtem Oktandiolgehalt beobachtet. Die Umwandlung bei der Probengelierung steigt mit dem Oktandiolgehalt was klar die Inkorporation der hydroxylfunktionellen Bestandteile in das härtende VEPU Netzwerk anzeigt.

Es konnte gezeigt werden, dass sich das Material beim Quellen in einem sauren Lösungsmittel, wie THF/HCl, leicht von einer Glass/Aluminium Verklebung ablösen lässt.

Die kationische Phototransferpolymerisation wurde dann mit einer Probe von VEPU und Undekanol im molaren Verhältnis Vinylether/Hydroxyl von 1:0,5 durchgeführt. Es wurde wiederum bei 25°C eine UV/NIR-Rheologie durchgeführt, um gehärtete Filme mit einer definierten Geometrie zu erhalten. Wie erwartet, war der weichmachende Effekt im Vergleich zu Oktandiol stärker ausgeprägt. Die Gelbildung verzögert sich bei gleicher Stöchiometrie und tritt bei einer Vinyletherumwandlung von 23% auf. Die resultierenden, flexiblen aber festen Filme wurden mechanisch aus dem Rheometeraufbau abgelöst und mit geringen Mengen von Triethylamin behandelt, um Reste der Photosäure zu entfernen.

Dann wurde eine Festphasen 13C NMR Spektroskopie der getrockneten Filme unter Verwendung von MAS (magic angle spinning) durchgeführt, um die Bildung von Acetalbindungen in den vergelten Polymerstrukturen nachzuweisen. Mittels dieser Verfahren konnte die Bildung von Acetalen in den Polymerstrukturen zweifelsfrei belegt werden.

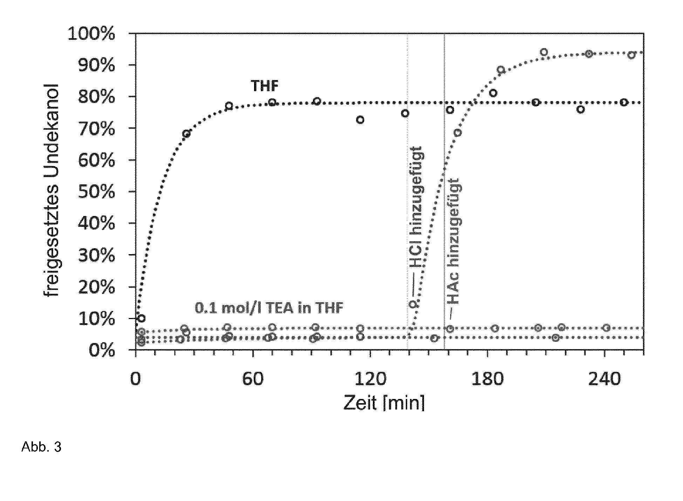

Für die genauere Untersuchung der Effizienz und Kinetik der Freisetzung wurde eine gaschromatographische Analyse durchgeführt, wobei Proben, die unter verschiedenen pH-Bedingungen für mehrere Stunden behandelt wurden, verwendet wurden. Figur 3 zeigt das relative, extrahierbare Undekanol von THF gequollenen Polymerfilmen in Abhängigkeit der Expositionsdauer und verschiedenen zugegebenen Bestandteilen. Die schwarze Kurve zeigt die ansteigende Undekanolkonzentration in dem feuchten THF-Überstand (0,36 mol/L H₂O). Die Undekanolkonzentration steigt innerhalb von Minuten auf 78% der anfänglich zugegebenen Menge. Dieses Ergebnis kann durch Reste der Photosäure aus der UV-Initiation erklärt werden, die anscheinend ausreichend ist, um die Hydrolyse der Acetalbindungen zu verursachen, wenn der Film in wasserhaltigen Lösungsmitteln gequollen wird. Die anderen Polymerfilme wurden daher in alkalischem THF gequollen, welches 0,1 mol/L Triethylamin enthielt, um die restliche Säure zu neutralisieren. Unter diesen Bedingungen waren nur 4-7% des Undekanols extrahierbar, was vermutlich dem restlichen ungebundenen Undekanol aus der Reaktion entspricht. Zu einer dieser Proben wurde nach einer Extraktionszeit von 139 Minuten Salzsäure zugegeben, während eine andere Probe nach 158 Minuten mit Essigsäure behandelt wurde. In beiden Fällen wurde eine Säurekonzentration von 0,1 mol/L nach der Neutralisation eingestellt. Die schwache Säure Essigsäure führte zu keinem erhöhten Gehalt an freiem Undekanol, wohingegen die Salzsäure, die Hydrolyse der Acetale bedingte und zu einer Freisetzung von 94% des zugegebenen Undekanols nach 80 Minuten bei Raumtemperatur führte.

## Patentansprüche

1. Verfahren zur Herstellung eines Acetal-haltigen Polymers, insbesondere eines Acetal-haltigen Polyurethan- oder Polyesterpolymers, umfassend Umsetzen mindestens eines Polymers mit Alkenylethergruppen-Seitenketten, das als Monomereinheit mindestens ein Alkenyletherpolyol enthaltend mindestens eine Alkenylethergruppe, insbesondere eine 1-Alkenylethergruppe, und mindestens zwei Hydroxylgruppen (-OH) enthält, insbesondere eines Polyurethans oder Polyesters, mit mindestens einem mono- oder polyfunktionellen Alkohol.

2. Verfahren nach Anspruch 1, **dadurch gekennzeichnet, dass** das Alkenyletherpolyol erhältlich ist durch
A) Umsetzen eines Alkenylethers, enthaltend mindestens eine Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon; oder
B) Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten.

3. Verfahren nach Anspruch 2, wobei das Alkenyletherpolyol erhältlich ist durch Umsetzen eines Alkenylethers, enthaltend mindestens eine Alkenylethergruppe und mindestens eine funktionelle Gruppe ausgewählt aus -OH, -COOH, -SH, -NH₂ und deren Derivaten, mit (i) einem Epoxid oder (ii) einem cyclischen Carbonat oder Derivat davon, **dadurch gekennzeichnet, dass** das Alkenyletherpolyol ein Alkenyletherpolyol der Formel (I) ist
wobei 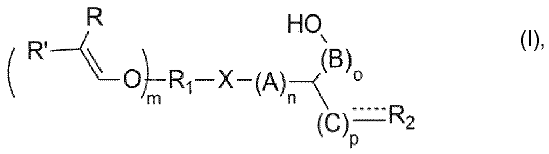 R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₂ ein organischer Rest ist, optional mit mindestens einer -OH Gruppe und/oder 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
X O, S, C(=O)O, OC(=O)O, C(=O)OC(=O)O, NRₓ, NRₓC(=O)O, NRₓC(=O)NRₓ oder OC(=O)NRₓ ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A, B und C unabhängig ausgewählt ist aus CR"R"',
R" und R"' unabhängig ausgewählt sind aus H, einer funktionellen Gruppe, und einem organischen Rest, insbesondere H und C₁₋₂₀ Alkyl, oder R" und R"' gemeinsam oder mit dem Kohlenstoffatom an welches sie gebunden sind ein organischer Rest sind, oder zwei von R" und
R"' die an benachbarte Kohlenstoffatome gebunden sind, zusammen eine Bindung bilden um eine Doppelbindung zwischen den benachbarten Kohlenstoffatomen auszubilden,
------ eine Einfach- oder Doppelbindung ist, wobei wenn es eine Doppelbindung ist, das Kohlenstoffatom, das an R₂ gebunden ist, nur einen Substituenten R" oder R"' trägt,
m eine ganze Zahl von 1 bis 10, vorzugsweise 1, ist,
n, p und o jeweils 0 oder eine ganze Zahl von 1 bis 10 sind, wobei n+p+o=1 oder mehr ist, insbesondere 1 oder 2, und
Rₓ H, ein organischer Rest oder 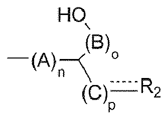 ist,
wobei wenn Rₓ nicht 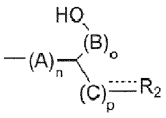 ist, R₂ mindestens einen Substituenten aufweist, der ausgewählt ist aus -OH und

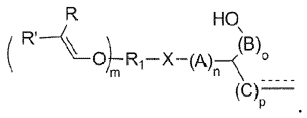

4. Verfahren nach Anspruch 2, wobei das Alkenyletherpolyol erhältlich ist durch Umsetzen eines Alkenylethers, enthaltend mindestens eine Alkenylethergruppe und mindestens eine funktionelle Gruppe ausgewählt aus (i) Epoxidgruppen und (ii) cyclischen Carbonatgruppen oder Derivaten davon, mit einem Alkohol, Thiol, einer Carbonsäure oder einem Amin oder Derivaten der vorgenannten, **dadurch gekennzeichnet, dass** das Alkenyletherpolyol ein Alkenyletherpolyol der Formel (V) ist 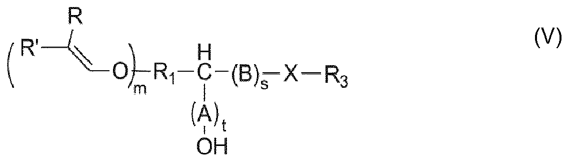 wobei
R₁ ein mindestens 2-wertiger organischer Rest ist, insbesondere ein mindestens 2-wertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom,
R₃ ein organischer Rest ist, optional mit 1 bis 1000 Kohlenstoffatomen, insbesondere ein optional 2- oder mehrwertiges, lineares oder verzweigtes, substituiertes oder unsubstituiertes Alkyl mit 1 bis 20 Kohlenstoffatomen, lineares oder verzweigtes, substituiertes oder unsubstituiertes Heteroalkyl mit 1 bis 20 Kohlenstoffatomen und mindestens einem Sauerstoff- oder Stickstoffatom, oder ein (Poly)Alkylenglykol der Formel -O-[CHRₐCH₂O]_{b}-R_{b} ist, wobei Rₐ H oder ein C₁₋₄-Alkylrest, R_{b} H oder 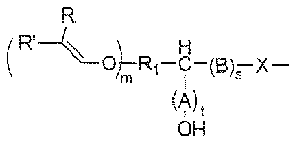 und b 1 bis 100 ist;
X O, S, OC(=O), OC(=O)O, OC(=O)OC(=O), NR_{z}, NR_{z}C(=O)O, NR_{z}C(=O)NR_{z} oder OC(=O)NR_{z} ist,
jedes R und R' unabhängig ausgewählt ist aus H, C₁₋₂₀ Alkyl und C₂₋₂₀ Alkenyl, wobei insbesondere eines von R und R' H und das andere C₁₋₄ Alkyl oder beide H sind,
jedes A und B unabhängig ausgewählt ist aus CR"R"',
R" und R"' unabhängig ausgewählt sind aus H, einer funktionellen Gruppe, und einem organischen Rest, insbesondere H und C₁₋₂₀ Alkyl, oder R" und R"' gemeinsam oder mit dem Kohlenstoffatom an welches sie gebunden sind ein organischer Rest sind, oder zwei von R" und
R"' die an benachbarte Kohlenstoffatome gebunden sind, zusammen eine Bindung bilden um eine Doppelbindung zwischen den benachbarten Kohlenstoffatomen auszubilden,
m eine ganze Zahl von 1 bis 10, vorzugsweise 1, ist,
s und t jeweils 0 oder eine ganze Zahl von 1 bis 10 sind, wobei s+t=1 oder mehr ist, insbesondere 1 oder 2, und
R_{z} H, ein organischer Rest oder 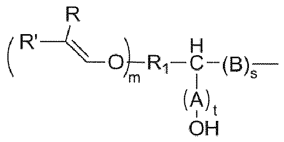 ist,
wobei wenn R_{z} nicht 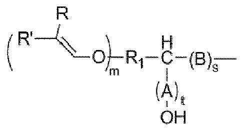 ist, R₃ mindestens einen Substituenten aufweist, der ausgewählt ist aus -OH und

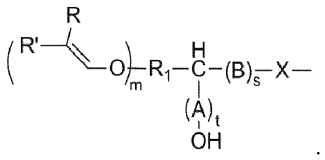

5. Verfahren nach einem der Ansprüche 1 bis 4, **dadurch gekennzeichnet, dass** der mono- oder polyfunktionelle Alkohol eine Verbindung der Formel (VI) ist
R₄(OH)ᵤ (VI)
wobei
R₄ ein ein- oder mehrwertiger organischer Rest ist, insbesondere ein ein- oder zweiwertiges lineares oder verzweigtes, substituiertes oder unsubstituiertes Alkyl mit 1 bis 20 Kohlenstoffatomen oder lineares oder verzweigtes, substituiertes oder unsubstituiertes Heteroalkyl mit 1 bis 20 Kohlenstoffatomen und mindestens einem Sauerstoff- oder Stickstoffatom; und
u eine ganze Zahl von 1 bis 10, vorzugsweise 1 bis 4 ist.

6. Verfahren nach einem der Ansprüche 1 bis 4, **dadurch gekennzeichnet, dass** der mono- oder polyfunktionelle Alkohol ein Hydroxylgruppen-haltiges Polymer, insbesondere ein Polyvinylalkohol ist, vorzugsweise mit einer Funktionalität von 1 bis 1000.

7. Verfahren nach einem der Ansprüche 1 bis 6, **dadurch gekennzeichnet, dass** das molare Verhältnis von Alkenylethergruppen zu Hydroxylgruppen im Bereich von 0,1 bis 10, vorzugsweise 0,8 bis 4,0, noch bevorzugter 1,0 bis 2,0 liegt.

8. Acetal-haltiges Polymer oder vernetzte Verbindung erhältlich mittels des Verfahrens nach einem der Ansprüche 1-7.

9. Verfahren zur pH-abhängigen Degradierung eines Polymers nach Anspruch 8, **dadurch gekennzeichnet, dass** das Polymer mit einer wässrigen Lösung mit einem pH<7 in Kontakt gebracht wird.

10. Verfahren zur pH-abhängigen Freisetzung einer Hydroxylgruppen-haltigen Verbindung aus einem Polymer nach Anspruch 8, **dadurch gekennzeichnet, dass** das Polymer mit einer wässrigen Lösung mit einem pH<7 in Kontakt gebracht wird.

11. Zusammensetzung, insbesondere Klebstoff-, Dichtstoff-, Beschichtungsmittel-, 3D-Druck-, Lithographie-, kosmetische oder pharmazeutische Zusammensetzung, enthaltend mindestens ein Acetal-haltiges Polymer nach Anspruch 8.

12. Verwendung eines Acetal-haltigen Polymers nach Anspruch 8 als Bestandteil einer Klebstoff-, Dichtstoff-, Beschichtungsmittel-, 3D-Druck-, Lithographie-, kosmetische oder pharmazeutische Zusammensetzung.
